# EUROPEAN PATENT SPECIFICATION

(11) **EP 0 993 158 B1**
(45) Date of publication and mention of the grant of the patent: **18.02.2004**
(21) Application number: 98118930.1
(22) Date of filing: 07.10.1998
(51) Int. Cl.: H04L 25/02, H04L 1/00

(54) **Apparatus and method for data rate conversion**
Anordnung und Verfahren zur Umsetzung einer Datenrate
Dispositif et méthode de conversion de débit de données

(43) Date of publication of application: 12.04.2000
(73) Proprietor: SIEMENS AKTIENGESELLSCHAFT, 80333 München (DE)
(72) Inventor: Emmer, Dieter, Dr.-Ing., 82110 Gemering (DE); Franz, Volker, 82178 Puchheim (DE); Bahrenburg, Stefan, Dipl.-Ing., 81477 München (DE)

(56) References cited:
- EP-A- 0 479 305
- WO-A-97/45976
- WO-A-98/27682
- GB-A- 1 362 653
- US-A- 4 882 726
- PATENT ABSTRACTS OF JAPAN vol. 096, no. 002, 29 February 1996 -& JP 07 288479 A (NEC CORP), 31 October 1995
- DATABASE WPI Section EI, Week 9730 Derwent Publications Ltd., London, GB; Class U21, AN 97-330810 XP002097424 -& JP 09 135275 A (TOSHIBA KK) , 20 May 1997
- STEEL R: "MOBILE RADIO COMUNICATIONS" 1996 , JOHN WILEY & SONS , IEEE PRESS, NEW YORK, USA XP002097423 019285 * page 425, line 1 - line 18 *
- BERROU C ET AL: "NEAR SHANNON LIMIT ERROR - CORRECTING CODING AND DECODING: TURBO-CODES (1)" PROCEEDINGS OF THE INTERNATIONAL CONFERENCE ON COMMUNICATIONS, ICC'93, GENEVA, vol. 2, 23 - 26 May 1993, pages 1064-1070, XP000371240 INSTITUTE OF ELECTRICAL AND ELECTRONICS ENGINEERS

## Description

The present invention relates to data communications apparatus and methods for communicating data. More specifically, the present invention relates to data communications apparatus and methods of communicating data in which data generated from a source is arranged to be matched to a rate at which data is communicated by a data transport means.

Digital communications systems are arranged to communicate data between transmitters and receivers by representing the data in a form which facilitates transmission of the data via a medium through which communication is effected. For example, in the case of radio communications, the data is represented as radio signals and transmitted between transmitters and receivers of communications system via the ether. In the case of broadband telecommunications networks, the data may be represented as light and communicated via, for example, a fibre optic network between transmitters and receivers of the system.

As a result of a limited bandwidth which is available to any data communications system, the transmission of data bearing signals is often regulated so as to provide each of the transmitters of the system with a substantially fair access to the available communications bandwidth. To this end, data communications systems are often provided with data multiplexing means or multiple access means which serves to effect a substantially fair allocation of bandwidth to the transmitters. Known multiplexing or multiple access schemes arrange for the data to be transported between the transmitters and receivers in bursts, packets or blocks which are scheduled for transmission on the data carrying media by the multiple access or multiplexing scheme.

One example of such a multiple access scheme is that which is used to schedule transmission of radio signals in a mobile radio telephone system. The multiple access scheme operates to schedule radio communications between a plurality of transmitters and a corresponding plurality of receivers via the same radio frequency spectrum. In this case, the multiple access scheme operates to share access to the allocated radio frequency spectrum between each of the transmitters contemporaneously or sequentially. This is effected by dividing the data into packets or blocks, which are represented as radio signals, and which are transmitted in a time slot or time frame allocated to the transmitter by the multiple access scheme.

Another example of a data communications system in which data is transported in packets or blocks, is that of a broadband telecommunications network which operates in accordance with Asynchronous Transfer Mode. In Asynchronous Transfer Mode telecommunications systems, data is transmitted as a plurality of cells, each of which comprises data to be directed to a particular receiver and information appertaining to an identification of the receiver to which the information is to be directed and a route via which the data should reach the receiver.

There is an increasing requirement for data communications systems to transport data from a plurality of different sources representative of various different data types. As such, the rate at which data may be produced may differ significantly between different data types, and may also differ in inherent characteristics. For example, one type of data source may be a speech coder which operates to generate frames of digital data representative of analogue speech signals produced by a user of the data communications system to conduct a telephone conversation. Other examples are the transmission of video pictures or captured images represented as digital data. As a result, the multiple access system forming part of the data communications system must be arranged to transport data from a variety of sources between the transmitters and the receivers of the system, the different data sources generating the data at different rates. For example, the generation of digital data representative of speech signals will occur at a substantially constant, and relatively low rate whereas the generation of digital data representing video images will be at a relatively high rate and in a case where only changes in the video images are transmitted, the digital data will be transmitted only intermittently. Other types of data source such as the transmission of computer data files is not constrained by a time of transmission of the data and therefore may occur at a substantially irregular or bursty rate.

As already explained, the multiple access scheme of a data communications system is typically arranged to optimise the use of the communications bandwidth allocated to the data communications system. As a result of the presence of a variety of different data types which could be transmitted by the data communications system, the multiple access scheme is often arranged to be optimised for the most prevalent or the most likely type of data to be communicated by the data communications system. As such the size of the packets, blocks or bursts, is therefore optimised for one particular type of data source traffic only. For example in the case of mobile radio telephony, the packet or burst size of radio signals in which data is conveyed, is often determined by the rate at which digital data representative of speech or voice signals is generated.

In a situation where a data source is generating data at a rate which is not compatible with that at which the data communications system has been optimised, frames of data generated by the data source will not be matched with the size of the packet, burst of block in which data is transported by the multiple access scheme. That is to say, that the size of the data frames generated by the data source will not fit with the pre-determined size of the data bearing block, packet or burst of the multiple access scheme. This might be because the data frame is too large or too small. If too large, then provision must be made to carry the frame in more than one transport data block. However, it is unlikely that the block will match exactly. As such, some provision must be made to the effect of filling the remaining data bearing capacity of the transport data packet, burst or block with data, in order to make optimum use of the communications bandwidth allocated to the transmitter by the multiple access scheme. This provision or process, is known to this skilled in the art as "rate matching".

One technique of rate matching, presented in a disclosure describing the Air-interface of the "Universal Telecommunications Radio Access Physical Layer Description, Specification System" Volume 0.3, produced by the "Special Mobile Group 2", of the Universal Mobile Terrestrial System Physical Layer Expert Group of the European Telecommunications Standards Institute", at Chapter 3.2.3 is known as unequal repetition. Unequal repetition is a known method of rate matching in which the whole or selected parts of a frame of data are repeated to an extent sufficient to fill a transport data block. However, such repetition only provides a means for detecting errors in the received data, or providing some limited error correction, either from a majority voting of the repeated data bits, in the case where the data is repeated more than three times, or by combining soft decision metrics indicative of a reliability of the repeated data bits, the combined metrics being used by a subsequent decoder. Therefore, in a case where data from the source frame is repeated, that part of the payload of the transport data block filled with repeated bits or symbols is not efficiently used and is not matched necessarily to the characteristics of the data communications channel on which the data is carried. A further known rate matching scheme effected by repetition or code puncturing, is disclosed in the "specification of the Air-Interface for Third Generation Mobile System" version 0, Volume 3, issued 18 December 1997, by the Association of Radio Industries and Businesses (ARIB) of Japan. This disclosure describes a rate matching process in which the data frame, generated by a data source has already been encoded by the source and is punctured in order to effect rate matching.

In WO 97 45976 A1 a wireless communications system using a rate matching scheme with repetition and puncturing similar as described in the previous paragraph is disclosed. This document describes a rate matching process in which data frames are encoded, repetition of the code symbols is performed by a symbol repeater and finally puncturing is used in order to effect rate matching.

In US 4 882 726 a pair of full duplex modems are connected and are designed to transmit to one another at the same predetermined band rate. While the first modem receives data at a bit rate faster than the band rate and converts the bit rate to the band rate, the second modem receives data at a bit rate slower than the band rate and therefore has to encode blocks of slower rate data bits into a larger number of bits to match the band rate.

It is an object of the present invention to provide a data communications apparatus with a substantially efficient means of rate matching.

The present invention resides generally in a data communication apparatus in which a frame of data generated by a data source is to be conveyed by a data transport means in a data block size greater than that of the data frame of the source, and providing an encoder to encode the source data frame at a rate corresponding to a relative difference in the size of the data frame and the size of the transport data block.

According to the present invention there is provided a data communication system according to patent claim 1.

By arranging for an encoder to encode the source data frame at a rate which has an effect of increasing the resultant size of the encoded data frame, so that it is substantially matched to the size of the payload of the transport data block, a substantially more efficient use of the capacity available within the transport data block not otherwise filled by the data frame is effected. This arrangement of encoding is such that the minimum distance of the encoded data is greater than the minimum distance which could be achieved using nearly selected repetition only.

The term minimum distance as used herein with reference to an error control encoding scheme refers to a minimum Hamming distance between any two code words formed from all possible code words within a coding scheme. The Hamming distance is calculated by the number of possible words that can be generated between any two code words of a set of code words.

Advantageously, the data communications apparatus includes means to puncture the encoded data, and in a case in which the encoded data is greater than the predetermined size of the data transport block, the encoded data block is punctured to the effect that the punctured encoded data block is substantially equal to the size of the transport data block. The error control encoder may operate in accordance with an error control algorithm such as a convolution code, a block code, a product code, turbo code or the like. The error control code could be any means of providing error protection or correction by adding redundancy to the encoded data in accordance with an algorithm applied to the data. Examples of error control codes known to those skilled in the art include convolutional codes, a Bose-Chaudhuri-Hocquenghem codes, Reed-Solomon codes, cyclic redundancy check codes or indeed any way of repeating or providing parity check bits to part of or the whole of a frame of digital data.

The error control algorithm may operate in accordance with a systematic error control code in which the error encoded block is comprised of redundant data and the source data.

The data communications apparatus may further include an interleaver which operates to interleave the encoded data block. The data source block may be pre-encoded by the data source.

The data communications apparatus may further include a receiver having an error control decoder and a receiver controller. In a case where the source data frame has been encoded with a systematic error control code, the receiver may further operate to optionally extract the source data bits from the systematically encoded data block independence upon the relative complexity of the decoding and combining operations.

According to a further aspect of the present invention there is provided a method of communicating data generated from at least one data source as according to patent claim 10.

One embodiment of the present invention will now be described, by way of example only, with reference to the accompanying drawings wherein;
- FIGURE 1: is a schematic block diagram of a mobile radio communication system;
- FIGURE 2: is a schematic block diagram of a data communications apparatus forming a link between the mobile station and a base station of the communications network shown in Figure 1;
- FIGURE 3: is a part schematic block diagram part process illustration of the data converter means shown in Figure 2;
- FIGURE 4: is a further embodiment of the data converter means shown in Figure 3; and
- FIGURE 5: is a schematic block diagram of a data encoder shown in Figure 4.

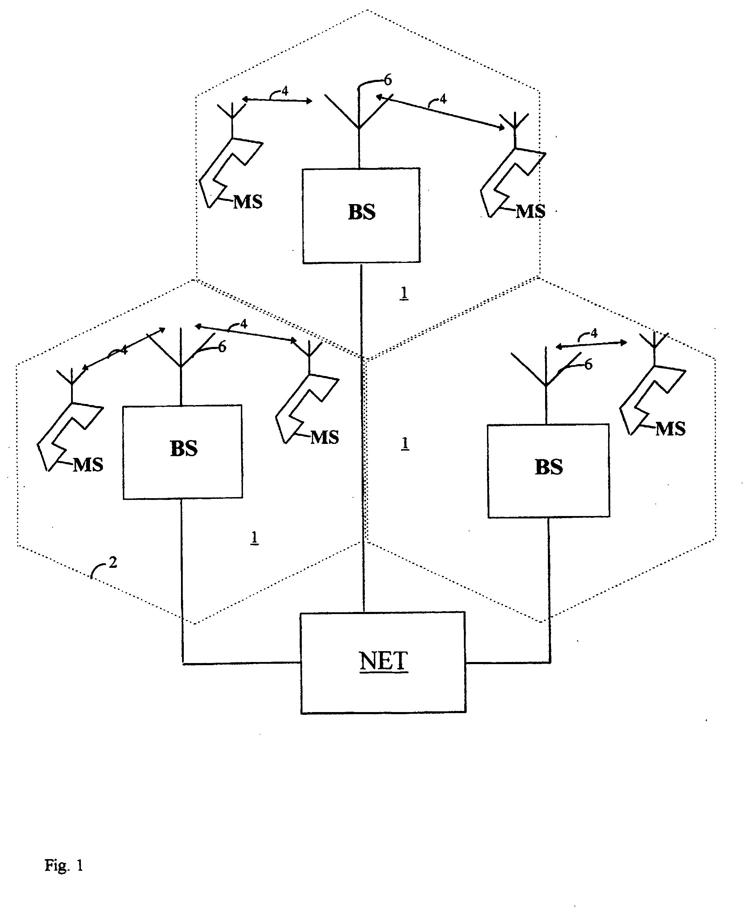

An example embodiment of the present invention will be described with reference to a mobile radio communications, system. Such a mobile radio communications system may be provided with a multiple access system which might for example operate in accordance with Time Division Multiple Access (TDMA) such as that used in the Global System for Mobiles, which is a mobile radio telephone standard administered by the European Telecommunications Standards Institute. The mobile radio communications system alternatively could be provided with a multiple access system which operates in accordance with Code Division Multiple Access (CDMA) such as that proposed for the third generation Universal Mobile Telecommunication System. However, as will be appreciated, any data communications system could be used to illustrate an example embodiment of the present invention, such as a Local Area Network, or a Broadband Telecommunications Network operating in accordance with Asynchronous Transfer Mode. These illustrative example data communications systems are characterised in particular in that data is transmitted as bursts, packets or blocks. In the case of a mobile radio communications system, the data is transported in bursts of data bearing radio signals, which represent a pre-determined data size. An example of such a mobile radio communication system is shown in Figure 1.

In Figure 1, three base stations BS, are shown to communicate radio signals with mobile stations MS, within a radio coverage area formed by cells 1 defined by broken lines 2. The mobile stations MS, and the base stations BS communicate data by transmitting radio signals designated 4, between antennas 6, coupled to the mobile stations MS and the base stations BS. The data is communicated between the mobile stations MS and the base stations BS using a data communications apparatus in which the data is transformed into the radio signals 4, which are communicated to the receive antenna 6, which detects the radio signals. The data is recovered by the receiver from the radio signals.

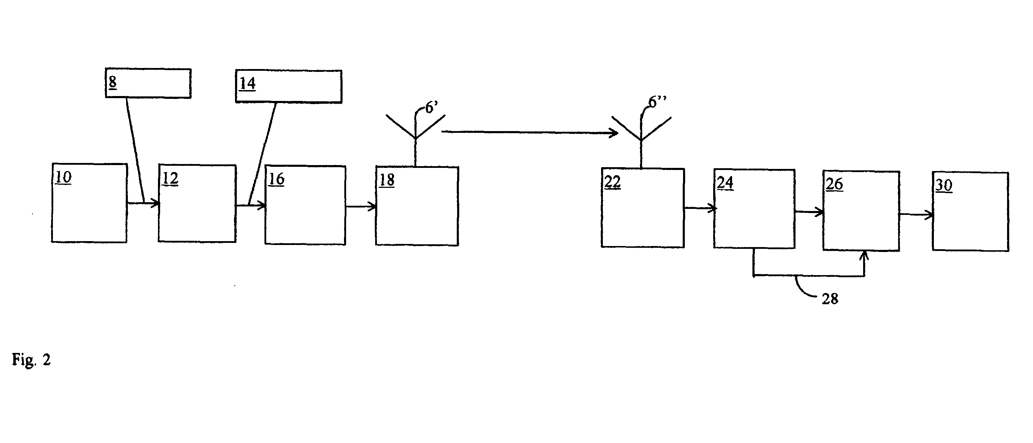

An illustrative example of a data communications apparatus forming a radio communications link between one of the mobile stations MS, and one of the base stations BS, is shown in Figure 2, where parts also appearing in Figure 1 bear identical numerical designations. In Figure 2 a source of data 10, generates a data frame 8, at a rate determined by a type of data which a source is generating. The data frames 8, generated by the source 10, are fed to a rate converter 12, which operates to convert the data frame 8, into a transport data block 14. The transport data block 14, is arranged to be substantially equal in size, to a predetermined size of an amount of data which can be carried by a burst of data bearing radio signals via which data is communicated by a radio interface formed by a transmitter 18, and receiver 22 pair.

The data transport block 14 is fed to a radio access processor 16, which operates to schedule transmission of the transport data block 14, over the radio access interface. At an appropriate time the transport data block 14, is fed by the radio access processor 16, to a transmitter 18 which operates to convert the transport data block into the burst of data bearing radio signals which are transmitted in a time period allocated for the transmitter to effect communication of the radio signals. At the receiver 22, an antenna 6" of the receiver detects the radio signals and down converts and recovers the data frame which is fed to a radio access de-scheduler 24. The multiple access de-scheduler 24, feeds the received data transport block to a rate de-converter 26, under control of the multiple access de-scheduler 24, effected via a conductor 28. The rate de-converter 26, thereafter feeds a representation of the regenerated data frame 8, to a destination or sink for the data frame 8 which is represented by the block 30.

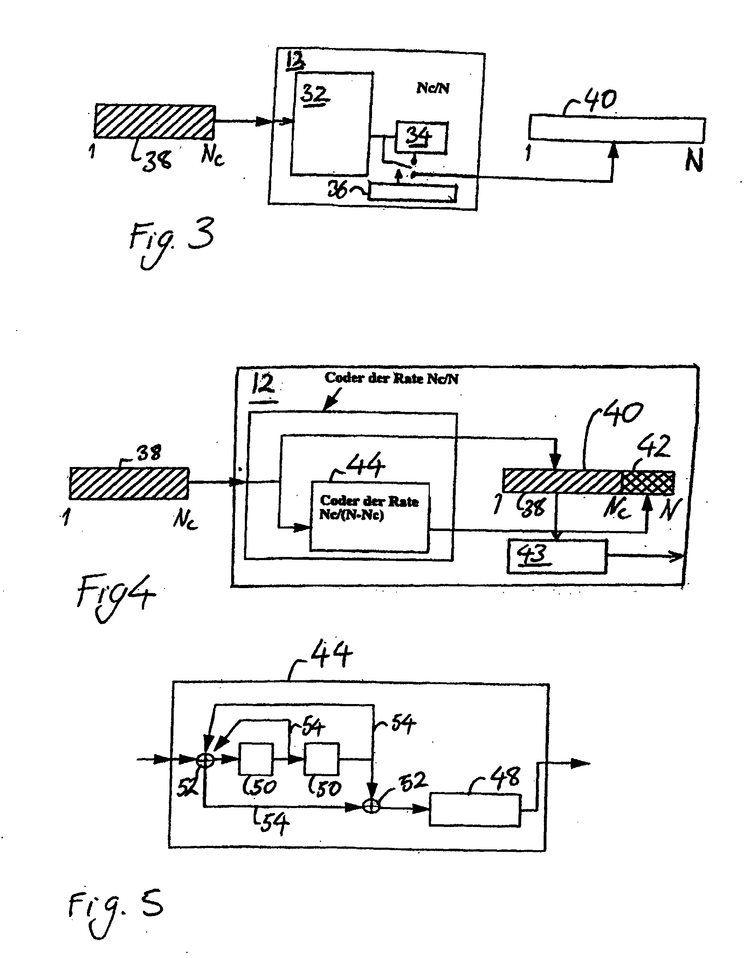

The rate converter 12, and rate de-converter 26, are arranged to make, as far as possible, optimum use of the data bearing capacity available within the transport data block 14. This is affected in accordance with the illustrative embodiment of the present invention by the rate matching converter shown in Figure 3. In Figure 3 the rate converter 12 is shown to include a data encoder connected to a data puncturer 34 under control of a rate matching controller 36. As shown in Figure 3 the data frame 38 is fed to the rate converter 12, and is received by the data encoder 32. The data encoder 32 operates to encode the data frame 38 with a code having a rate which has an affect of generating a data block which is of a size corresponding to the size of the payload of the data transport block which is shown in Figure 3 as the data block 40. Optionally and under control of the rate matching controller 36, the encoded data frame may be punctured to the affect of reducing the number of bits in a case where the number of bits of the encoded data frame is greater than the size of the transport data block 40. In this case appropriate puncturing is affected so that the punctured encoded data frame fits within the data transport block 40.

As will be appreciated by those skilled in the art, various encoding algorithms could be used within the data encoder 32. For example the encoder 32, may operate in accordance with a block code such as a B-C-H, Reed-Solomon or Hamming code. Furthermore the encoding algorithm could be a convolutional code, a turbo code or a product code. The coding rates of such error control codes are, however, constrained to being limited to certain discrete values, which may not necessarily generate an encoded data frame which is exactly matched to the transport data block size. For this reason, the encoded data frame, encoded with a code at a rate which is closest to that required to fill the data transport block, may produce more bits than can be fitted into the data transport block 40. In this case, therefore, optionally the encoded data frame may be punctured as herein before described under control of the rate matching controller 36. The puncturing is arranged to effect a reduction in the encoded data frame to match the transport data block size.

A further example of a rate matching controller is shown in Figure 4. In Figure 4 the rate matching controller is shown to be comprised of a data encoder which operates in accordance with a systematic error control code. The systematic error control code generates the data transport data block 40, from the source data frame 38, in combination with redundant data bits 42, which are generated by the systematic encoder. The systematic encoder may for example be a recursive systematic convolutional code. The rate of the systematic convolutional code is then equal to (N_{C}/(N-N_{C})), in order to generate redundant data bits equal to (N-N_{C}), where N_{C} is the number of bits in the source data frame and N is the number of bits in the transport data block. An example of such a recursive systematic convolutional code with puncturing is shown in Figure 5, where parts also appearing in Figures 4 and 3 bear identical numerical designations. In Figure 5 the encoder 44 is shown to be comprised of a convolution encoder 46 and a puncturer 48. The convolution encoder 46 is comprised of memory elements 50, and modulo-2 adders 52. As is well known to those skilled in art, the convolutional encoder is arranged so that bits fed to the memory elements 50, are applied to the modulo-2 adders 52, which in combination generate redundant data bits in accordance with the information present in the memory elements 50, and fed to the input of the first modulo-2 adder 52, in dependence upon the number and position of the feedback taps 54.

At the receiver of the communications apparatus, the data transport block 40 is recovered by the radio communications receiver 22, in combination with the multiple access de-scheduler 24, and fed to the rate de-converter 26. The rate de-converter 26, may optionally decode the encoded data frame to regenerate the data frame 38 by performing an error decoding algorithm corresponding to the algorithm used to encode the data frame. Therefore, for example, in a case where the data frame is encoded with a convolutional code, the rate de-converter 26, will operate to decode the data transport block, using a maximum likelihood sequence estimator otherwise known as a Soft Output Viterbi decoder. Soft Output Viterbi decoders are known to generate soft output information, the soft outputs being indicative of a relative confidence in the decoded data bits. Thereafter, this soft output information can be further used by a subsequent decoder which may be, for example, decoding the data frame in a case where the data frame itself has been encoded by the data source. Furthermore the rate de-converter 26, may operate to effect further iterations of the decoding process in order to increase the integrity or the confidence in the correct recovery of the data frame.

In a case, the transport data block has been generated using a systematic encoder, and where a number of computations or calculations which may be performed by the receiver is limited by a relative computational power of the receiver, the receiver may wish to simply extract the data frame from the data transport block, without performing a decoding process on the encoded data frame.

In a case where the number of bits N_{C} in the source data frame is less than a half that of the size of the transport data block 40, the convolutional encoder may be one which has a rate greater or less than half but would be punctured in order to effect the rate matching process. This would also be the case where the number of bits in the data frame is greater then one half that of the size of the transport data block, since the puncturing process can be easily adapted accordingly. The coding process in the case of recursive systematic convolution codes can also be combined or replaced with any kind of concatenated coding scheme such as by a turbo coding.

As already mentioned, the data frame generated by the source 38, may be representative of base data or information to be transmitted by the source, which may itself have already been encoded by the source before delivery to the data communication system. In this case, an interleaver 43, may be optionally provided in the data rate converter 12, and correspondingly a de-interleaver in the rate de-converter 26, to interleave the data frame and the redundant data generated by the error control encoder. It is well known to those skilled in the art that the performance of error control codes is best when the errors occurring during transmission of the data are caused by Gaussian noise, with an effect that the errors are independently distributed throughout the transport data block. However, in the case of mobile radio communications, data errors often occur in bursts or blocks, which can cause a catastrophic failure of the decoding process. However, by interleaving the relative positions of the bits before transmission, and de-interleaving the relative placement of the bits upon reception, any burst of errors occurring during transmission will be substantially distributed about the de-interleaved data transport block, with an effect that a probability of correctly decoding the data frame is substantially increased.

A further improvement in the integrity of the data frame may be achieved by iteratively decoding the data frame. A number of iterations of the iterative decoding process is determined by a relative computing power available to the receiver. With such iterative decoding, such as that which may be effected with a soft output Viterbi decoder, a first estimate of the data frame is made by decoding the encoded data frame and storing the result. Subsequent estimates of the data frame are made from the stored first estimate, by decoding the encoded data frame using soft decision information generated from the first estimate, and subsequently, in further iterations from other previous estimates of the data frame.

As will be appreciated by those skilled in the art, various modifications may be made to the embodiment herein before described without departing from the scope of the present invention. In particular, any form of error encoding may be used in the rate matching process in combination with any form of puncturing or deletion of data bits prior to transmission. Furthermore the present invention finds application with any data communications apparatus in which data is transported by the data communications apparatus in blocks of a predetermined size which are not matched to the size of data frames generated by a data source.

## Claims

1. Data communications apparatus which operates to communicate data from at least one data source (10) generated as data frames (8; 38) of a size determined by a rate at which the data is generated, said apparatus comprising
- data transport means (6', 16, 18) which is arranged to communicate data (14; 40) generated by said sources in blocks of a pre-determined size, and
- means (12) for converting said source data frames (8; 38) into transport data blocks (14; 40) with a size substantially matched to the pre-determined block size of said data transport means, wherein said means (12) for converting said source data frames includes an encoder (32; 44), which operates to encode said source data frame (8; 38) at a code rate which effects conversion of said source data frame (8;38) to substantially match said pre-determined block size of said data transport means (6', 16, 18), whereas said code rate depends on the size of said source data frames,
**characterized in that**
the size of the encoded data frames is greater than the predetermined block size of said transport means (6', 16, 18) and said apparatus further comprises means (34; 48) to puncture the encoded data frame to effect reduction of the encoded data frame, whereby the punctured encoded data frame is substantially matched to the pre-determined size of said transport means (6', 16, 18).

2. Data communications apparatus as claimed in Claim 1, wherein the encoder (32; 44) is an error control encoder.

3. Data communications apparatus as claimed in any preceding Claim, wherein said error control (32; 44) encoder includes means to operate in accordance with an error control algorithm such as a convolutional code, a block code, a product code or turbo code or the like.

4. Data communications apparatus as claimed in any of Claims 2 or 3, wherein said error control encoder (44) operates in accordance with a systematic error control code, which has means to form said encoded data frame from redundant data (42) and said source data frame (38) substantially unchanged.

5. Data communications apparatus as claimed in Claim 4, wherein the systematic error control code (44) is a systematic recursive error control code.

6. Data communication apparatus as claimed in any preceding Claim including means to form the source data frame (8;38) by encoding base data representative of information to be communicated by said source.

7. Data communication apparatus as claimed in any preceding Claim, and further including a receiver (26) having an error control decoder and a receiver controller, wherein said receiver control includes means to selectively decode said encoded data frame.

8. Data communications apparatus as claimed in Claim 7 when dependent on Claims 5 or 6, wherein the receiven (26) includes means to selectively extract said source data bits from said systematically encoded data and to combine the extracted source data with the block of source data in dependence upon the relative complexity of the decoding and combining operation.

9. Data communications apparatus as claimed in either of Claim 7 or 8, wherein the error control decoder (26) in combination with the receiver controller has means to decode the encoded data frame using a plurality of iterations, each iteration generating soft decision information, which is used in subsequent iterations.

10. A method of communicating data generated from at least one data source (10) generated as data frames (8; 38) of a size determined by a rate at which the data is generated, said method comprising the steps of;
- converting said source data frames (8;38) into data blocks of a size substantially matched to a pre-determined block size for communication by a data transport means (6', 16, 18), wherein the step of converting said source data frames (8; 38) into said transport data blocks (14; 40) is;
- encoding said source data frame (8; 38) at a code rate which effects conversion of said source data frame (8; 38) into said transport data block (14; 40), whereas said code rate depends on the size of said source data frames (8; 38),
**characterized in that**
the size of the encoded data frame is greater than the predetermined size of said data transport means (6', 16, 18) and said method further comprising the step of
puncturing the encoded data frame to reduce the amount of data in the encoded data frame, whereby the punctured encoded data is substantially matched to the pre-determined size of said data transport means (6', 16, 18).

11. A method of communicating data as claimed in Claim 10, wherein the step of encoding said source data frame, comprises the step of;
- encoding said source data frame (8; 38) with an error control encoder (32; 44).

12. A method of communicating data as claimed in Claim 10 or 11, wherein the step of encoding said source data frame (8; 38) is effected in accordance with an error control algorithm, such as a convolutional code, a block code, a product code or a turbo code or the like.

13. A method of communicating data as claimed in any of Claims 10 to 12, wherein said error control algorithm is a systematic error control code, which operates to produce said encoded data frame from redundant data and said source data frame substantially unchanged.

14. A method of communicating data as claimed in any of Claims 10 to 13, wherein the source data frame (8;38) is formed by encoding base data representative of information to be communicated by said source.

15. A method of communicating data as claimed in any of Claims 13 to 14, and further including the steps of;
- determining a relative complexity of decoding said systematically encoded data block and combining the decoded data with said source data frame, and, in dependence upon a relative complexity, either
- decoding said encoded data frame and combining said decoded data with said source frame, or
- extracting said source data from said transport data block and forwarding the source data to a destination or sink.

16. A method of communicating data as claimed in Claim 14 or 15, and further including the steps of;
- decoding (26) said encoded data frame to generate a first estimate of said data frame and soft decision information; and
- making subsequent estimates of said data frame by decoding said encoded data frame using soft decision information generated from previous estimates of said data frame, thereby improving a probability of correctly detecting said data frame with subsequent estimates.

17. A method of communicating data as claimed in Claim 16, and further including the step of;
- iteratively repeating the step of making subsequent estimates, consummate upon a relative amount of computing power available to the receiver, and a time in which said data frame should be recovered.

## Patentansprüche

1. Datenkommunikationsvorrichtung, die Daten von mindestens einer Datenquelle (10) übermittelt, die als Datenrahmen (8; 38) einer durch eine Rate, mit der die Daten erzeugt werden, bestimmten Größe erzeugt werden, wobei die Vorrichtung folgendes umfaßt:
ein Datentransportmittel (6', 16, 18), das so ausgelegt ist, daß es durch die Quellen erzeugte Daten (14; 40) in Blöcken einer vorbestimmten Größe übermittelt, und
ein Mittel (12) zum Umsetzen der Quellendatenrahmen (8; 38) in Transportdatenblöcke (14; 40) mit einer Größe, die im wesentlichen an die vorbestimmte Blockgröße des Datentransportmittels angepaßt ist, wobei das Mittel (12) zum Umsetzen der Quellendatenrahmen einen Codierer (32; 44) enthält, der den Quellendatenrahmen (8; 38) mit einer Coderate codiert, die sich auf die Umsetzung des Quellendatenrahmens (8; 38) auswirkt, so daß der Quellendatenrahmen (8; 38) im wesentlichen mit der vorbestimmten Blockgröße des Datentransportmittels (6', 16, 18) übereinstimmt, während die Coderate von der Größe der Quellendatenrahmen abhängt,
**dadurch gekennzeichnet, daß**
die Größe der codierten Datenrahmen größer als die vorbestimmte Blockgröße des Transportmittels (6', 16, 18) ist und die Vorrichtung weiterhin ein Mittel (34; 48) zum Punktieren des codierten Datenrahmens, um eine Reduktion des codierten Datenrahmens zu bewirken, umfaßt, wodurch der punktierte codierte Datenrahmen im wesentlichen an die vorbestimmte Größe des Transportmittels (6', 16, 18) angepaßt ist.

2. Datenkommunikationsvorrichtung nach Anspruch 1, wobei der Codierer (32; 44) ein Fehlerkontrollcodierer ist.

3. Datenkommunikationsvorrichtung nach einem der vorhergehenden Ansprüche, wobei der Fehlerkontrollcodierer (32; 44) ein Mittel zum Betrieb gemäß einem Fehlerkontrollalgorithmus wie zum Beispiel einem Faltungscode, einem Blockcode, einem Produktcode oder einem Turbocode oder dergleichen enthält.

4. Datenkommunikationsvorrichtung nach einem der Ansprüche 2 oder 3, wobei der Fehlerkontrollcodierer (44) gemäß einem systematischen Fehlerkontrollcode arbeitet, der ein Mittel zur Bildung des codierten Datenrahmens aus redundanten Daten (42) und dem Quellendatenrahmen (38) im wesentlichen unverändert aufweist.

5. Datenkommunikationsvorrichtung nach Anspruch 4, wobei der systematische Fehlerkontrollcode (44) ein systematischer rekursiver Fehlerkontrollcode ist.

6. Datenkommunikationsvorrichtung nach einem der vorhergehenden Ansprüche mit einem Mittel zum Bilden des Quellendatenrahmens (8; 38) durch Codieren von Basisdaten, die durch die Quelle zu übermittelnde Informationen darstellen.

7. Datenkommunikationsvorrichtung nach einem der vorhergehenden Ansprüche, weiterhin mit einem Empfänger (26) mit einem Fehlerkontrolldecodierer und einer Empfängersteuerung, wobei die Empfängersteuerung ein Mittel zum selektiven Decodieren des codierten Datenrahmens enthält.

8. Datenkommunikationsvorrichtung nach Anspruch 7 bei Abhängigkeit von Anspruch 5 oder 6, wobei der Empfänger (26) ein Mittel zum selektiven Extrahieren der Quellendatenbit aus den systematisch codierten Daten und zum Kombinieren der extrahierten Quellendaten mit dem Quellendatenblock in Abhängigkeit von der relativen Komplexität des Decodierungs- und Kombiniervorgangs enthält.

9. Datenkommunikationsvorrichtung entweder nach Anspruch 7 oder Anspruch 8, wobei der Fehlerkontrolldecodierer (26) zusammen mit der Empfängersteuerung ein Mittel zum Decodieren des codierten Datenrahmens unter Verwendung mehrerer Iterationen aufweist, wobei jede Iteration Soft-Entscheidungsinformationen erzeugt, die in nachfolgenden Iterationen benutzt werden.

10. Verfahren zum Übermitteln von Daten, die von mindestens einer Datenquelle (10) und als Datenrahmen (8; 38) einer durch eine Rate, mit der die Daten erzeugt werden, bestimmten Größe erzeugt werden, mit den folgenden Schritten:
Umsetzen der Quellendatenrahmen (8; 38) in Datenblöcke einer Größe, die im wesentlichen an eine vorbestimmte Blockgröße zur Übermittlung durch ein Datentransportmittel (6', 16, 18) angepaßt ist, wobei der Schritt des Umsetzens der Quellendatenrahmen (8; 38) in die Transportdatenblöcke (14; 40) folgender ist;
Codieren des Quellendatenrahmens (8; 38) mit einer Coderate, die sich auf die Umsetzung des Quellendatenrahmens (8; 38) in den Transportdatenblock (14; 40) auswirkt, wobei die Coderate von der Größe der Quellendatenrahmen (8; 38) abhängt,
**dadurch gekennzeichnet, daß**
die Größe des codierten Datenrahmens größer als die vorbestimmte Größe des Datentransportmittels (6', 16, 18) ist und das Verfahren weiterhin den folgenden Schritt umfaßt:
Punktieren des codierten Datenrahmens, um die Datenmenge in dem codierten Datenrahmen zu reduzieren, wodurch die punktierten codierten Daten im wesentlichen an die vorbestimmte Größe des Datentransportmittels (6', 16, 18) angepaßt sind.

11. Verfahren zum Übermitteln von Daten nach Anspruch 10, wobei der Schritt des Codierens des Quellendatenrahmens den folgenden Schritt umfaßt:
Codieren des Quellendatenrahmens (8; 38) mit einem Fehlerkontrollcodierer (32; 44).

12. Verfahren zum Übermitteln von Daten nach Anspruch 10 oder 11, wobei der Schritt des Codierens des Quellendatenrahmens gemäß einem Fehlerkontrollalgorithmus wie zum Beispiel einem Faltungscode, einem Blockcode, einem Produktcode oder einem Turbocode oder dergleichen durchgeführt wird.

13. Verfahren zum Übermitteln von Daten nach einem der Ansprüche 10 bis 12, wobei der Fehlerkontrollalgorithmus ein systematischer Fehlerkontrollcode ist, der den codierten Datenrahmen aus redundanten Daten und dem Quellendatenrahmen im wesentlichen unverändert erzeugt.

14. Verfahren zum Übermitteln von Daten nach einem der Ansprüche 10 bis 13, wobei der Quellendatenrahmen (8; 38) durch Codieren von Basisdaten, die durch die Quelle zu übermittelnde Informationen darstellen, gebildet wird.

15. Verfahren zum Übermitteln von Daten nach einem der Ansprüche 10 bis 14, weiterhin mit den folgenden Schritten:
Bestimmen einer relativen Komplexität des Decodierens des systematisch codierten Datenblocks und in Abhängigkeit von einer relativen Komplexität entweder
Decodieren des codierten Datenrahmens und Kombinieren der decodierten Daten mit dem Quellenrahmen oder
Extrahieren der Quellendaten aus dem Transportdatenblock und Weiterleiten der Quellendaten zu einem Ziel oder einer Senke.

16. Verfahren zum Übermitteln von Daten nach Anspruch 14 oder 15, weiterhin mit den folgenden Schritten:
Decodieren (26) des codierten Datenrahmens, um eine erste Schätzung des Datenrahmens und Soft-Entscheidungsinformationen zu erzeugen; und
Erstellen nachfolgender Schätzungen des Datenrahmens durch Decodieren des codierten Datenrahmens unter Verwendung von aus vorherigen Schätzungen des Datenrahmens erzeugten Soft-Entscheidungsinformationen, wodurch eine Wahrscheinlichkeit, daß der Datenrahmen mit nachfolgenden Schätzungen korrekt detektiert wird, verbessert wird.

17. Verfahren zum Übermitteln von Daten nach Anspruch 16, weiterhin mit dem folgenden Schritt:
iteratives Wiederholen des Schritts des Erstellens nachfolgender Schätzungen, vollzogen bei einer relativen Menge von an dem Empfänger verfügbarer Rechenleistung und einer Zeit, innerhalb der der Datenrahmen wiederhergestellt sein sollte.

## Revendications

1. Dispositif de communication de données qui opère pour communiquer des données provenant d'au moins une source de données (10) générées en tant que trames de données (8 ; 38) de taille déterminée par un débit de génération des données, ledit dispositif comprenant :
- un moyen de transport de données (6', 16, 18) qui est organisé pour communiquer des données (14 ; 40) générées par lesdites sources dans des blocs de taille prédéterminée, et
- un moyen (12) pour convertir lesdites trames de données de la source (8 ; 38) en blocs de données de transport (14 ; 40) dont la taille est essentiellement adaptée à la taille prédéterminée des blocs dudit moyen de transport de données, dans lequel ledit moyen (12) de conversion desdites trames de données de la source inclut un codeur (32; 44) qui opère pour coder ladite trame de données de la source (8 ; 38) selon un débit de code qui a pour effet de convertir ladite trame de données de la source (8 ; 38) de manière à ce qu'elle soit essentiellement adaptée à ladite taille prédéterminée des blocs dudit moyen de transport de données (6', 16, 18), tandis que ledit débit de code dépend de la taille desdites trames de données de la source,
**caractérisé en ce que**
la taille des trames de données codées est supérieure à la taille prédéterminée des blocs dudit moyen de transport (6', 16, 18) et ledit dispositif comprend, en outre, un moyen (34 ; 48) pour poinçonner la trame de données codée afin de réduire la trame de données codée, la trame de données codée poinçonnée étant essentiellement adaptée à la taille prédéterminée dudit moyen de transport (6', 16, 18).

2. Dispositif de communication de données selon la revendication 1, dans lequel le codeur (32 ; 44) est un codeur de contrôle d'erreur.

3. Dispositif de communication de données selon l'une quelconque des revendications précédentes, dans lequel ledit codeur de contrôle d'erreur (32 ; 44) inclut un moyen pour opérer conformément à un algorithme de contrôle d'erreur tel qu'un code convolutionnel, un code de bloc, un code de produit ou un turbo-code ou similaire.

4. Dispositif de communication de données selon l'une des revendications 2 ou 3, dans lequel ledit codeur de contrôle d'erreur (44) opère selon un code de contrôle d'erreur systématique qui a le moyen de former ladite trame de données codée à partir de données redondantes (42) et de ladite trame de données de la source (38) essentiellement inchangée.

5. Dispositif de communication de données selon la revendication 4, dans lequel le code de contrôle d'erreur systématique (44) est un code de contrôle d'erreur récursif systématique.

6. Dispositif de communication de données selon l'une quelconque des revendications précédentes, incluant un moyen pour former la trame de données de la source (8 ; 38) en codant des données de base représentatives des informations devant être communiquées par ladite source.

7. Dispositif de communication de données selon l'une quelconque des revendications précédentes, incluant, en outre, un récepteur (26) pourvu d'un décodeur de contrôle d'erreur et d'un régulateur de récepteur, dans lequel ledit régulateur de récepteur inclut un moyen pour procéder à un décodage sélectif de ladite trame de données codée.

8. Dispositif de communication de données selon la revendication 7 lorsqu'elle dépend des revendications 5 ou 6, dans lequel le récepteur (26) inclut un moyen pour procéder à l'extraction sélective desdits bits de données de la source à partir desdites données systématiquement codées et pour combiner les données de la source extraites avec le bloc de données de la source en fonction de la complexité relative de l'opération de décodage et de combinaison.

9. Dispositif de communication de données selon l'une des revendications 7 ou 8, dans lequel le décodeur de contrôle d'erreur (26), combiné avec le régulateur de récepteur, a le moyen de décoder la trame de données codée en utilisant une pluralité d'itérations, chaque itération générant des informations de décision pondérée qui sont utilisées lors d'itérations subséquentes.

10. Procédé de communication de données générées par au moins une source de données (10) en tant que trames de données (8 ; 38) dont la taille est déterminée par un débit de génération des données, ledit procédé comprenant les étapes qui consistent à :
- convertir lesdites trames de données de la source (8 ; 38) en blocs de données de taille essentiellement adaptée à une taille de bloc prédéterminée en vue de leur communication par un moyen de transport de données (6', 16, 18), dans lequel l'étape de conversion desdites trames de données de la source (8 ; 38) en lesdits blocs de données de transport (14 ; 40) consiste à :
- coder ladite trame de données de la source (8 ; 38) selon un débit de code qui effectue la conversion de ladite trame de données de la source (8 ; 38) en ledit bloc de données de transport (14 ; 40), tandis que ledit débit de code dépend de la taille desdites trames de données de la source (8 ; 38), **caractérisé en ce que** la taille de la trame de données codée est supérieure à la taille prédéterminée dudit moyen de transport de données (6', 16, 18) et ledit procédé comprend, en outre, l'étape consistant à :
poinçonner la trame de données codée pour réduire la quantité de données dans la trame de données codée, les données codées poinçonnées étant essentiellement adaptées à la taille prédéterminée dudit moyen de transport de données (6', 16, 18).

11. Procédé de communication de données selon la revendication 10, dans lequel l'étape consistant à coder ladite trame de données de la source comprend l'étape consistant à :
- coder ladite trame de données de la source (8 ; 38) avec un codeur de contrôle d'erreur (32 ; 44).

12. Procédé de communication de données selon la revendication 10 ou 11, dans lequel l'étape consistant à coder ladite trame de données de la source (8 ; 38) est exécutée conformément à un algorithme de contrôle d'erreur, tel qu'un code convolutionnel, un code de bloc, un code de produit ou un turbo-code ou similaire.

13. Procédé de communication de données selon l'une quelconque des revendications 10 à 12, dans lequel ledit algorithme de contrôle d'erreur est un code de contrôle d'erreur systématique qui opère pour produire ladite trame de données codée à partir de données redondantes et de ladite trame de données de la source essentiellement inchangée.

14. Procédé de communication de données selon l'une quelconque des revendications 10 à 13, dans lequel la trame de données de la source (8 ; 38) est formée en codant des données de base représentatives des informations devant être communiquées par ladite source.

15. Procédé de communication de données selon l'une quelconque des revendications 13 à 14, incluant, en outre, les étapes consistant à :
- déterminer une complexité relative de décodage dudit bloc de données systématiquement codé et combiner les données décodées à ladite trame de données de la source et procéder, en fonction d'une complexité relative,
- soit au décodage de ladite trame de données codée et à la combinaison desdites données décodées avec ladite trame de la source,
- soit à l'extraction desdites données de la source dudit bloc de données de transport et au convoyage des données de la source vers une destination ou un récepteur.

16. Procédé de communication de données selon la revendication 14 ou 15, incluant, en outre, les étapes consistant à :
- décoder (26) ladite trame de données codée pour générer une première estimation de ladite trame de données et des informations de décision pondérée ; et
- réaliser des estimations subséquentes de ladite trame de données en décodant ladite trame de données codée en utilisant les informations de décision pondérée générées à partir d'estimations antérieures de ladite trame de données, améliorant ainsi la probabilité de détecter correctement ladite trame de données avec les estimations subséquentes.

17. Procédé de communication de données selon la revendication 16, incluant, en outre, l'étape consistant à :
- répéter de manière itérative l'étape de réalisation d'estimations subséquentes, en consommant une quantité relative de puissance de calcul disponible pour le récepteur et un temps dans lequel ladite trame de données doit être récupérée.
